# EUROPÄISCHE PATENTSCHRIFT

(11) **EP 2 675 649 B1**
(45) Veröffentlichungstag und Bekanntmachung des Hinweises auf die Patenterteilung: **16.09.2015**
(21) Anmeldenummer: 12714539.9
(22) Anmeldetag: 10.02.2012
(51) Int. Cl.: B60K 37/02

(54) **BEDIENVORRICHTUNG IN EINEM FAHRZEUG**
OPERATING DEVICE IN A VEHICLE
SYSTÈME DE COMMANDE À L'INTÉRIEUR D'UN VÉHICULE

(30) Priorität: 17.02.2011 DE 102011011606
(43) Veröffentlichungstag der Anmeldung: 25.12.2013
(73) Patentinhaber: Volkswagen Aktiengesellschaft, 38436 Wolfsburg (DE)
(72) Erfinder: KUHN, Mathias, 14129 Berlin (DE); HAHN, Alexander, 38104 Braunschweig (DE); DEFOORT, Simon, DE / 38104 Braunschweig (FR); PARAVANTES, George, M1V 2M1 Toronto, Ontario (CA)
(86) Internationale Anmeldenummer: PCT/DE2012/000124
(87) Internationale Veröffentlichungsnummer: WO 2012/110020

(56) Entgegenhaltungen:
- EP-A1- 1 783 004
- EP-A1- 2 431 210
- DE-A1- 4 213 129
- DE-A1- 19 521 887
- DE-A1-102006 014 724
- DE-A1-102009 033 186
- FR-A1- 2 833 541
- US-A1- 2004 155 524
- US-B1- 6 181 996

## Beschreibung

Die vorliegende Erfindung betrifft eine Bedienvorrichtung in einem Fahrzeug mit einer mobilen Bedieneinrichtung, die eine Anzeigefläche umfasst, auf welcher zumindest ein Anzeigeelement anzeigbar ist, dem mehrere Funktionen zugeordnet sind. Ferner umfasst die Bedienvorrichtung eine Halterung, von welcher die mobile Bedieneinrichtung aufnehmbar ist, und eine Eingabeeinrichtung zum Durchführen einer Eingabe, die einer zu dem Anzeigeelement gehörigen Funktion zugeordnet ist, wobei die Halterung so ausgebildet ist, dass die mobile Bedieneinrichtung bei zumindest zwei Positionen positionierbar ist. Des Weiteren umfasst die Bedienvorrichtung eine Steuervorrichtung zum Erzeugen eines Steuerbefehls in Abhängigkeit von einer Eingabe in die Eingabeeinrichtung.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittel-konsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Des Weiteren ist aus der US 2004/155524 A1 ein Vorrichtung nach dem Oberbegriff des Anspruchs 1 beschrieben, welche es erlaubt, die elektrischen und mechanischen Vorrichtungen an verschiedenen Stellen anzubringen. Dazu sind in dem Fahrzeug mehrere Schlitze angebracht, in welche Verbindungskomponenten, welche Verbindungen zwischen den Vorrichtungen und dem Fahrzeug schaffen, angeordnet sind. Dabei kann beispielsweise ein Bildschirm über eine Verbindungskomponente an jeder beliebigen Stelle in dem Schlitz ange-bracht werden. Wenn der Bildschirm in einem Schlitz befestigt wird, rastet er an dieser Stelle ein. Um die Position zu wechseln, muss der Bildschirm erst wieder gelöst werden und kann dann wieder an jeder anderen Position entweder in dem gleichen Schlitz oder jedem anderen im Fahrzeug vorhandenen Schlitz eingesetzt werden. Weiterhin kann ermittelt werden, in welchem Schlitz im Fahrzeug sich der Bildschirm befindet.

Zusätzlich beschreibt die DE 10 2006 014724 A1 ein Informationssystem für Insassen eines Fahrzeugs. Das Informationssystem umfasst dabei ein Display, welches in zumindest drei Positionen geschwenkt werden kann. Dabei kann der auf dem Display anzeigbare Anzeigeinhalt abhängig davon sein, in welcher Schwenkposition sich das Display befindet.

Für die Anzeige von Information in einem Fahrzeug ergeben sich sehr spezielle Anforderungen. Die Informationsaufnahme im Fahrzeug erfolgt zum einen durch den Fahrer und zum anderen ggf. durch einen Beifahrer. Dabei ist zu beachten, dass bestimmte Funktionen nur für den Beifahrer bestimmt sind. Der Fahrer darf diese Funktionen nicht ausführen, da sie zu einer Ablenkung während der Fahrt führen würden. Es ist daher vorgeschlagen worden, ein sogenannten Dual-View-Display einzusetzen, bei dem betrachtungswinkelabhängig unterschiedliche Anzeigeinhalte erkennbar sind. Von einem solchen Dual-View-Display kann beispielsweise dem Fahrer die Anzeige des Navigationssystems dargestellt werden und dem Beifahrer ein Video.

Der vorliegenden Erfindung liegt die Aufgabe zugrunde, eine Bedienvorrichtung der eingangs genannten Art bereitzustellen, welches Funktionen sowohl für den Fahrer als auch für den Beifahrer ausführen kann, durch welche jedoch die Sicherheit beim Führen des Fahrzeugs nicht beeinträchtigt wird.

Erfindungsgemäß wird diese Aufgabe durch eine Bedienvorrichtung mit den Merkmalen des Anspruchs 1 gelöst. Vorteilhafte Ausgestaltungen und Weiterbildungen ergeben sich aus den abhängigen Ansprüchen.

Die erfindungsgemäße Bedienvorrichtung ist dadurch gekennzeichnet, dass die Bedienvorrichtung ferner eine mit der Steuervorrichtung gekoppelte Positionserfassungseinrichtung aufweist, mittels welcher die Positionen der von der Halterung aufgenommenen mobilen Bedieneinrichtung erfassbar sind. Die dem zumindest einem Anzeigeelement zugeordneten Funktionen sind in zumindest zwei Funktionsgruppen unterteilt. Die Steuervorrichtung ist erfindungsgemäß so ausgebildet, dass nur Steuerbefehle der ersten Funktionsgruppe erzeugbar sind, wenn von der Positionserfassungseinrichtung erfasst worden ist, dass sich die mobile Bedieneinrichtung in einer ersten Position befindet, und dass nur Steuerbefehle der zweiten Funktionsgruppe erzeugbar sind, wenn von der Positionserfassungseinrichtung erfasst worden ist, dass sich die mobile Bedieneinrichtung in der zweiten Position befindet. Die Halterung umfasst erfindungsgemäß eine Leiste und eine Aufnahmeeinrichtung zum lösbaren Aufnehmen der mobilen Bedieneinrichtung, wobei die Aufnahmeeinrichtung entlang der Leiste verschiebbar ist und Abschnitte der Leiste der ersten und zweiten Position der mobilen Bedieneinrichtung zugeordnet sind.

Die mobile Bedieneinrichtung ist bei der ersten Position im Fahrzeug insbesondere für eine Bedienung durch den Fahrer angeordnet. Bei der zweiten Position ist sie insbesondere für eine Bedienung durch den Beifahrer angeordnet. Die erste Funktionsgruppe betrifft somit Funktionen, die für den Fahrer des Fahrzeugs zugelassen sind. Die zweite Funktionsgruppe betrifft Funktionen, die für den Beifahrer zugelassen sind. Die Funktionen der ersten oder zweiten Funktionsgruppe unterscheiden sich in zumindest einer Funktion von der jeweils anderen Funktionsgruppe. Die zweite Funktionsgruppe kann jedoch die Funktionen der ersten Funktionsgruppe vollständig umfassen. In diesem Fall enthält die zwei zweite Funktionsgruppe jedoch Funktionen, die nicht von der ersten Funktionsgruppe umfasst sind. Diese Funktionen der zweiten Funktionsgruppe, die nicht in der ersten Funktionsgruppe enthalten sind, betreffen beispielsweise die Wiedergabe eines Videofilms oder den Zugriff auf das Internet insgesamt oder nur den Zugriff auf bestimmte Internetseiten. Derartige Funktionen darf der Fahrer des Fahrzeugs nicht während der Fahrt ausführen. Sie sind somit gesperrt, wenn sich die mobile Bedieneinrichtung in der ersten Position befindet, welche dem Fahrer des Fahrzeugs zugeordnet ist. Bei der erfindungsgemäßen Bedienvorrichtung wird somit sichergestellt, dass bestimmte Funktionen nur dann freigeschaltet sind, wenn sich die mobile Bedieneinrichtung in der zweiten Position befindet, das heißt der Position, die dem Beifahrer zugeordnet ist. Auf diese Weise leistet die erfindungsgemäße Bedienvorrichtung einen Beitrag zur Sicherheit beim Fahren mit dem Fahrzeug.

Gemäß einer Ausgestaltung der erfindungsgemäßen Bedienvorrichtung wird das zumindest eine auf der Anzeigefläche der mobilen Bedieneinrichtung angezeigte Anzeigeelement in einer ersten Darstellungsart angezeigt, wenn von der Positionserfassungseinrichtung erfasst worden ist, dass sich die mobile Bedieneinrichtung in der ersten Position befindet, und das Anzeigeelement wird in einer zweiten Darstellungsart angezeigt, wenn von der Positionserfassungseinrichtung erfasst worden ist, dass sich die mobile Bedieneinrichtung in der zweiten Position befindet. Durch diese Ausgestaltung kann die Darstellung des Anzeigeelements an den jeweiligen Betrachter angepasst werden. Wenn sich die mobile Bedieneinrichtung in der für den Fahrer vorgesehenen Position befindet, können in der Darstellungsart des Anzeigeelements die für den Fahrer relevanten Informationen herausgestellt werden. Wenn sich die mobile Bedieneinrichtung hingegen in der für den Beifahrer vorgesehenen Position befindet, kann die Darstellungsart an die Bedürfnisse eines Beifahrers angepasst werden. Bei der für den Fahrer ausgelegten ersten Darstellungsart werden die Informationen insbesondere so angezeigt, dass sie der Fahrer besonders schnell und intuitiv erfassen kann. Beispielsweise werden Betriebsparameter des Fahrzeugs oder für die Routenführung relevante Informationen des Navigationssystems besonders groß dargestellt, sodass sie der Fahrer schnell erfassen kann. Ferner werden Anzeigeinhalte, die für den Fahrer nur von untergeordneter Bedeutung sind, ausgeblendet oder verkleinert angezeigt. Bei der für den Beifahrer ausgelegten zweiten Darstellungsart kann berücksichtigt werden, dass der Beifahrer die Anzeigefläche länger betrachten kann, ohne zwischendurch den Blick abwenden zu müssen. Es können somit mehr Informationen innerhalb des Anzeigeelements ggf. auch in verkleinerter Form angezeigt werden.

Gemäß einer Weiterbildung der erfindungsgemäßen Bedienvorrichtung umfasst die Halterung eine Leiste und eine Aufnahmeeinrichtung. Die Aufnahmeeinrichtung ist zum Aufnehmen der mobilen Bedieneinrichtung, insbesondere zum lösbaren Aufnehmen der mobilen Bedieneinrichtung, ausgebildet. Beispielsweise kann die mobile Bedieneinrichtung in die Aufnahmeeinrichtung hinein oder auf die Aufnahmeeinrichtung aufgesteckt werden. Die Aufnahmeeinrichtung ist bei dieser Weiterbildung entlang der Leiste verschiebbar. In diesem Fall sind Abschnitte der Leiste der ersten und der zweiten Position der mobilen Bedieneinrichtung zugeordnet.

Die Leiste ist insbesondere auf dem Armaturenbrett des Fahrzeugs angeordnet. Sie erstreckt sich beispielsweise von der Mitte des Fahrzeugs bis zum Rand des Fahrzeugs auf der Beifahrerseite. Ferner kann vorgesehen sein, dass sich der Winkel der Aufnahmeeinrichtung und damit die Ausrichtung der Anzeigefläche der mobilen Bedieneinrichtung in Abhängigkeit von der Position der Aufnahmeeinrichtung auf der Leiste verändert. In der ersten Position kann die in der Aufnahmeeinrichtung befindliche mobile Bedieneinrichtung in Richtung der Sitzposition des Fahrers verschwenkt sein, in der zweiten Position kann die Anzeigefläche der mobilen Bedieneinrichtung zur Sitzposition des Beifahrers gerichtet sein. Hierdurch wird erreicht, dass die. in der Aufnahmeeinrichtung befindliche mobile Bedieneinrichtung sehr einfach und stufenlos innerhalb des Fahrzeugs verschiebbar ist.

Gemäß einer weiteren Ausgestaltung der erfindungsgemäßen Bedienvorrichtung umfasst die Eingabeeinrichtung fest im Fahrzeug angeordnete Bedienelemente und/oder Bedienelemente der mobilen Bedieneinrichtung. Die fest im Fahrzeug angeordneten Bedienelemente können beispielsweise auf dem Lenkrad des Fahrzeugs oder bei der Halterung angeordnet sein. Diese Bedienelemente können zum Bedienen von Fahrzeugfunktionen ausgebildet sein. Alternativ oder zusätzlich können sie jedoch auch zum Bedienen von Funktionen ausgebildet sein, die Anzeigeelementen zugeordnet sind, die auf der Anzeigefläche der mobilen Bedieneinrichtung angezeigt werden. Des Weiteren kann die Oberfläche der Anzeigefläche der mobilen Bedieneinrichtung berührungsempfindlich ausgebildet sein, sodass die mobile Bedieneinrichtung einen sogenannten Touchscreen bereitstellt. Auch dieser Touchscreen ist in diesem Fall Teil der Eingabeeinrichtung. Die Fahrzeugfunktionen sowie die Funktionen der mobilen Bedieneinrichtung lassen sich auf diese Weise auf vielfältige Weise vom Nutzer bedienen, wobei die Bedienung an die Situation im Fahrzeug angepasst sein kann. Insbesondere Funktionen, auf welche der Fahrer vielfach zugreifen muss, können durch Bedienelemente auf dem Lenkrad des Fahrzeugs ausgeführt werden. Funktionen, die hingegen vielfach vom Beifahrer benötigt werden, können durch Bedienelemente auf der Halterung für die mobile Bedieneinrichtung betätigt werden.

Gemäß einer weiteren Ausgestaltung der erfindungsgemäßen Bedienvorrichtung weist diese eine erste Schnittstelle zum Datenaustausch zwischen der mobilen Bedieneinrichtung und einem Datenbus des Fahrzeugs auf. Bei dieser Schnittstelle kann es sich um eine drahtgebundene oder eine drahtlose Schnittstelle handeln. Auf diese Weise wird die mobile Bedieneinrichtung in die Kommunikationsstruktur des Fahrzeugs eingebunden.

Des Weiteren kann die Bedienvorrichtung eine zweite Schnittstelle zum Datenaustausch zwischen der mobilen Bedieneinrichtung und der Halterung und eine dritte Schnittstelle zum Datenaustausch zwischen der Halterung und einem Datenbus des Fahrzeugs aufweisen. Die Halterung kann somit nicht nur der mechanischen Befestigung der mobilen Bedieneinrichtung dienen, sondern auch der elektronischen Kopplung der mobilen Bedieneinrichtung mit dem Datenbus des Fahrzeugs. Dabei kann die dritte Schnittstelle der vorgenannten ersten Schnittstelle entsprechen.

Gemäß einer weiteren Ausgestaltung der erfindungsgemäßen Bedienvorrichtung weist diese eine Verarbeitungseinrichtung auf, mittels welcher Kommunikationsverbindungen zum Internet und/oder zu Mobilfunknetzen herstellbar sind. Mittels der Verarbeitungseinrichtung ist es somit vorteilhafterweise möglich, nicht nur auf Einrichtungen des Fahrzeugs mittels der Bedienvorrichtung zuzugreifen, sondern auch auf externe Einrichtungen, wie Internetservern und Einrichtungen eines Mobilfunknetzes.

Die vorliegende Erfindung betrifft schließlich ein Fahrzeug mit einer Bedienvorrichtung, wie sie vorstehend beschrieben wurde.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Bedienvorrichtung,
- Figur 2: zeigt die Anordnung des Ausführungsbeispiels der erfindungsgemäßen Bedienvorrichtung in einem Fahrzeug, bei welcher sich die mobile Bedieneinrichtung in einer ersten Position befindet,
- Figur 3: zeigt die Anzeige auf der Anzeigefläche der mobilen Bedieneinrichtung in der ersten Position,
- Figur 4: zeigt die Anordnung des Ausführungsbeispiels der erfindungsgemäßen Bedienvorrichtung in einem Fahrzeug, bei welcher sich die mobile Bedieneinrichtung in einer zweiten Position befindet und
- Figur 5: zeigt die Anzeige auf der Anzeigefläche der mobilen Bedieneinrichtung in der zweiten Position.

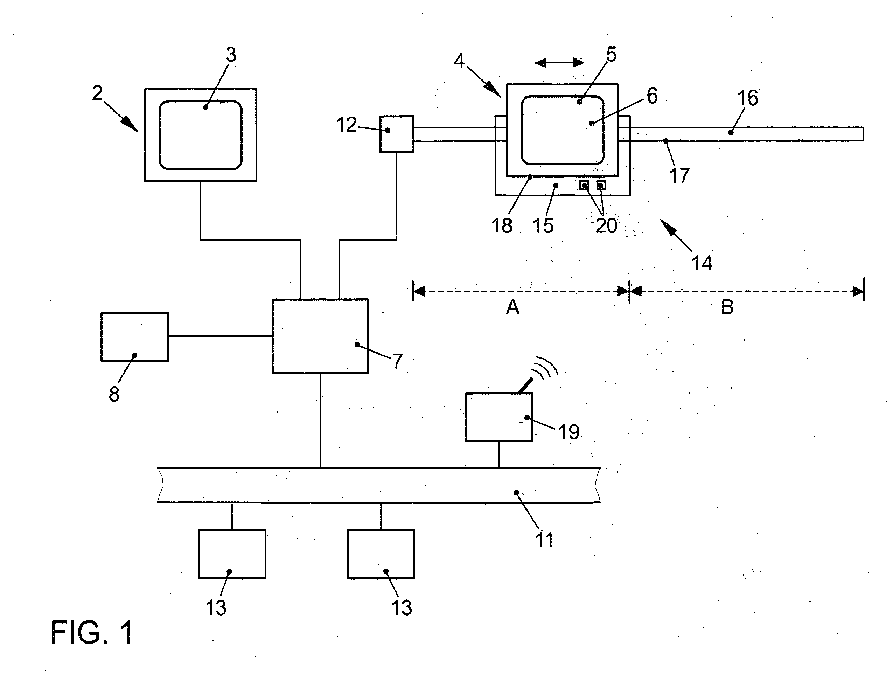

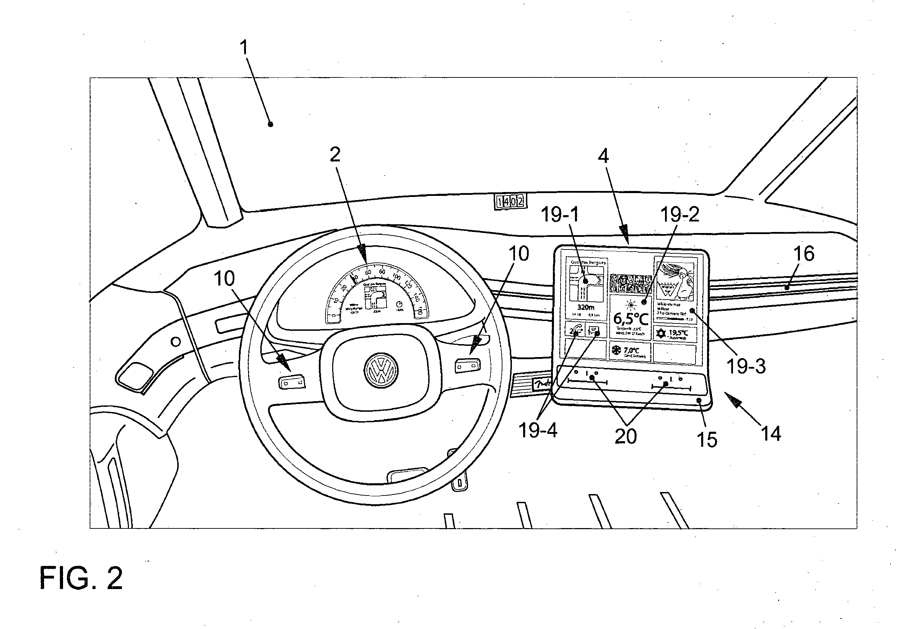

Im Folgenden wird mit Bezug zu den Fig. 1 und 2 der Aufbau der Ausführungsbeispiels der erfindungsgemäßen Bedienvorrichtung erläutert:
In einem Fahrzeug 1 ist in an sich bekannter Weise ein Kombiinstrument mit einer Anzeigeeinrichtung 2 vorgesehen, die eine erste Anzeigefläche 3 im direkten Sichtfeld des Fahrers des Fahrzeugs 1 umfasst. In einem Bereich, der sich von der Mittelkonsole des Fahrzeugs 1 bei dem Armaturenbrett bis zum äußeren Rand bei der Sitzposition des Beifahrers erstreckt, ist eine Halterung 14 für eine mobile, d. h. in der Position veränderbare, Bedieneinrichtung 4 angeordnet. Die mobile Bedieneinrichtung 4 umfasst eine zweite Anzeigefläche 5, die eine berührungsempfindliche Oberfläche 6 aufweist. Von der mobilen Bedieneinrichtung 4 wird somit ein sogenannter Touchscreen bereitgestellt.

Die Halterung 14 umfasst eine Aufnahmeeinrichtung 15, die so ausgebildet ist, dass die mobile Bedieneinrichtung 4 nicht nur in der Position veränderbar ist, sondern auch abgenommen werden kann. Die Aufnahmeeinrichtung 15 nimmt die mobile Bedieneinrichtung 4 somit lösbar auf. Sie kann auf die Aufnahmeeinrichtung 15 aufgesteckt werden, sodass diese mechanisch von der Aufnahmeeinrichtung 15 gehalten wird. Auf Aufnahmeeinrichtung 15 weist ferner Stecker auf, die in Buchsen der mobilen Bedieneinrichtung 4 eingreifen, wenn die mobile Bedieneinrichtung 4 von der Aufnahmeeinrichtung 15 gehalten wird. Auf diese Weise wird nicht nur eine mechanische Halterung bereitgestellt, sondern auch eine elektronische Schnittstelle 18 zum Datenaustausch zwischen der Aufnahmeeinrichtung 15 und der mobilen Bedieneinrichtung 4.

Die Aufnahmeeinrichtung 15 umfasst ferner mehrere Bedienelemente 20, über welche insbesondere Funktionen betätigt werden können, zu denen Informationen auf der Anzeigefläche 5 der mobilen Bedieneinrichtung 4 angezeigt werden.

Die Halterung 14 weist ferner eine Leiste 16 auf, welche sich im Wesentlichen horizontal entlang des Armaturenbretts des Fahrzeugs 1 von der Mittelkonsole bis zum äußeren Rand bei der Sitzposition des Beifahrers erstreckt. Die Aufnahmeeinrichtung 15 ist verschiebbar an der Leiste 16 befestigt. Der Fahrer oder der Beifahrer des Fahrzeugs 1 kann auf diese Weise die mobile Bedieneinrichtung 4 in der Aufnahmeeinrichtung 15 entlang der Leiste 16 hin und her verschieben.

Bei der Leiste 16 ist ferner eine Positionserfassungseinrichtung 17 vorgesehen, mittels welcher die Position der Aufnahmeeinrichtung 15 bei der Leiste 16 erfasst werden kann. Beispielsweise kann die Position der Aufnahmeeinrichtung 15 durch elektrische Kontakte erfasst werden.

Des Weiteren werden Daten, die über die Schnittstelle 18 von der mobilen Bedieneinrichtung 4 zur Aufnahmeeinrichtung 15 übertragen worden sind, über die Leiste 16 und eine weitere Schnittstelle 12 zu einer Steuervorrichtung 7 übertragen. Über diese Schnittstelle 12 wird auch die von der Positionserfassungseinrichtung 17 erfasste Position der Aufnahmeeinrichtung 15 entlang der Leiste 16 an die Steuervorrichtung 7 übertragen. Befindet sich die Aufnahmeeinrichtung 15 in einem Bereich A, ordnet die Steuervorrichtung 7 der Aufnahmeeinrichtung 15 eine erste Position zu. Diese Position ist dem Fahrer des Fahrzeugs 1 zugeordnet. Der Bereich A ist so gewählt, dass der Fahrer des Fahrzeugs 1 bei dieser Position die Anzeigefläche 5 der mobilen Bedieneinrichtung 4 gut ablesen kann. Befindet sich die Aufnahmeeinrichtung 15 hingegen in dem Bereich B, ordnet die Steuervorrichtung 7 der Aufnahmeeinrichtung 15 eine zweite Position zu, welche für den Beifahrer ausgelegt ist.

Die Steuervorrichtung 7 ist ferner mit der Anzeigeeinrichtung 2 des Kombiinstruments des Fahrzeugs 1 sowie Bedienelementen 8 gekoppelt.

Ferner ist die Steuervorrichtung 7 über einen Datenbus 11 des Fahrzeugs mit anderen Fahrzeugeinrichtungen 13 sowie einer Verarbeitungseinrichtung 19 gekoppelt, welche Kommunikationsverbindungen zum Internet und zu Mobilfunknetzen herstellen kann. Mittels der Steuervorrichtung 7 werden Grafikdaten für die Anzeige auf der Anzeigefläche 5 der mobilen Bedieneinrichtung 4 erzeugt. Diese Grafikdaten werden über die Schnittstellen 12 und 18 an die mobile Bedieneinrichtung 4 übertragen. Auf der Anzeigefläche 5 werden insbesondere Anzeigeelemente 19 dargestellt. Diese Anzeigeelemente 19 können zum einen verschiedenen Fahrzeugeinrichtungen 13 zugeordnet sein, wie beispielsweise Zielführungseinrichtungen, wie dem Navigationssystem, Fahrerassistenzeinrichtungen, Multimediaeinrichtungen und Kommunikationseinrichtungen. Die Anzeigeelemente 19 können zum Beispiel sogenannte Funktionswidgets sein, welche Meldungen eines E-Mail-Programms einer Telekommunikationseinrichtung oder eines Wetterdiensts anzeigen. Zum anderen können die Anzeigeelemente 19 Anwendungen zugeordnet sein, welche Betriebsparameter des Fahrzeugs anzeigen.

Funktionen, die dem Anzeigeelement 19 zugeordnet sind, können über die verschiedenen Bedienelemente 8, 10 und 20 ausgeführt werden. Bei Betätigung der Bedienelemente 8, 10 und 20 wird von der Steuervorrichtung 7 ein zugeordneter Steuerbefehl erzeugt, welcher zur Ausführung der gewünschten Funktion führt.

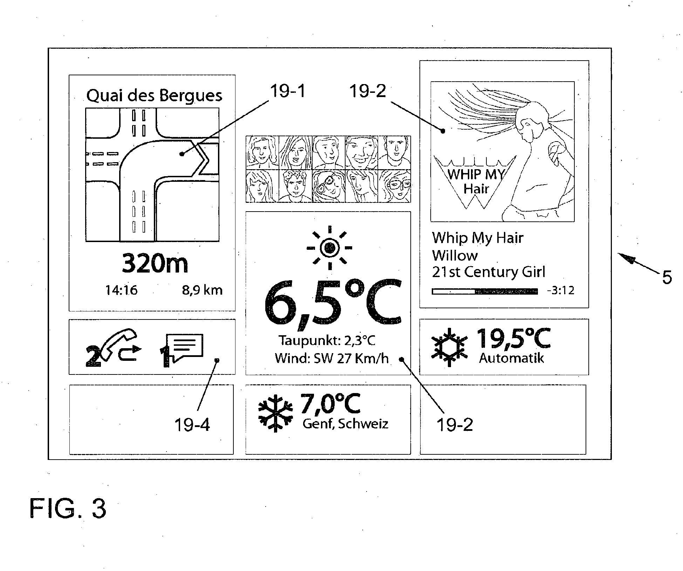

In den Fig. 2 und 3 ist beispielhaft die Darstellung auf der Anzeigefläche 4 gezeigt, wenn von der Positionserfassungseinrichtung 17 erfasst worden ist, dass sich die Aufnahmeeinrichtung 15 bei der ersten Position, das heißt im Bereich A befindet. Es wird ein Anzeigeelement 19-1 des Navigationssystems des Fahrzeugs 1 angezeigt, ein Anzeigeelement 19-2, welches die aktuelle Temperatur, den Taupunkt und die Windgeschwindigkeit anzeigt, und ein Anzeigeelement 19-3 einer Musikwiedergabeeinrichtung des Fahrzeugs 1. Des Weiteren wird ein Anzeigeelement 19-4 angezeigt, welches der Verarbeitungseinrichtung 19 für Kommunikationsverbindungen mit dem Internet und Mobilfunknetzen zugeordnet ist. In dem in den Fig. 2 und 3 gezeigten Beispiel visualisiert das Anzeigeelement 19-4, das zwei verpasste Telefonanrufe eingegangen sind und eine neue E-Mail eingegangen ist.

Zumindest ein Anzeigeelement 19, welches auf der Anzeigefläche 5 der mobilen Bedieneinrichtung 4 angezeigt wird, ist mehreren Funktionen zugeordnet. Als Beispiel wird dies anhand des Anzeigeelements 19-4 der Verarbeitungseinrichtung 19 erläutert. Durch Betätigen der Bedienelemente 8, 10 oder 20 kann der Nutzer im Fahrzeug 1 Telefonanrufe tätigen, E-Mails von einem fahrzeugexternen Server abrufen oder Webseiten des Internets zur Anzeige auf der Anzeigefläche 5 bringen. Beispielsweise ist es möglich, dass der Nutzer sich auf der Anzeigefläche 5 Videos eines Videodienstes im Internet anzeigen lässt. Diese verschiedenartigen Funktionen sind dem Anzeigeelement 19-4 zugeordnet, welches zu der Verarbeitungseinrichtung 19 gehört. Der Nutzer kann über die Bedienelemente 8, 10 und 20 Steuerbefehle erzeugen. Dieser Bedienvorgang wird mittels des Anzeigeelements 19-4 visualisiert.

Die Funktionen, die dem Anzeigeelement 19-4 zugeordnet sind, sind nun innerhalb der Steuervorrichtung 7, welche die entsprechenden Steuerbefehle erzeugt, in zwei Funktionsgruppen unterteilt. Die erste Funktionsgruppe enthält alle Funktionen, welche sowohl vom Fahrer als auch vom Beifahrer ausgeführt werden dürfen. Die zweite Funktionsgruppe enthält die Funktionen, die nur vom Beifahrer ausgeführt werden dürfen, nicht jedoch vom Fahrer. Zu der zweiten Funktionsgruppe gehört beispielsweise der Aufruf eines Videodienstes im Internet. Die Steuervorrichtung 7 ist nun so ausgebildet, dass nur Steuerbefehle der ersten Funktionsgruppe erzeugbar sind, wenn von der Positionserfassungseinrichtung 17 erfasst worden ist, dass sich die mobile Bedieneinrichtung 4, das heißt die Aufnahmeeinrichtung 15 hierfür, bei der ersten Position befindet. Wenn von der Positionserfassungseinrichtung 17 erfasst worden ist, dass sich die mobile Bedieneinrichtung 4, das heißt die Aufnahmeeinrichtung 15 hierfür, in der zweiten Position befindet, sind nur Steuerbefehle der zweiten Funktionsgruppe erzeugbar.

In dem hier beschriebenen Beispiel bedeutet dies, dass in der ersten Position der mobilen Bedieneinrichtung, welche für den Fahrer des Fahrzeugs 1 vorgesehen ist, Funktionen, wie der Aufruf von Videodiensten im Internet nicht ausführbar sind. Befindet sich die mobile Bedieneinrichtung 4 jedoch in der zweiten Position für den Beifahrer des Fahrzeugs 1, sind alle Funktionen ausführbar, die dem Anzeigeelement 19-4 zugeordnet sind.

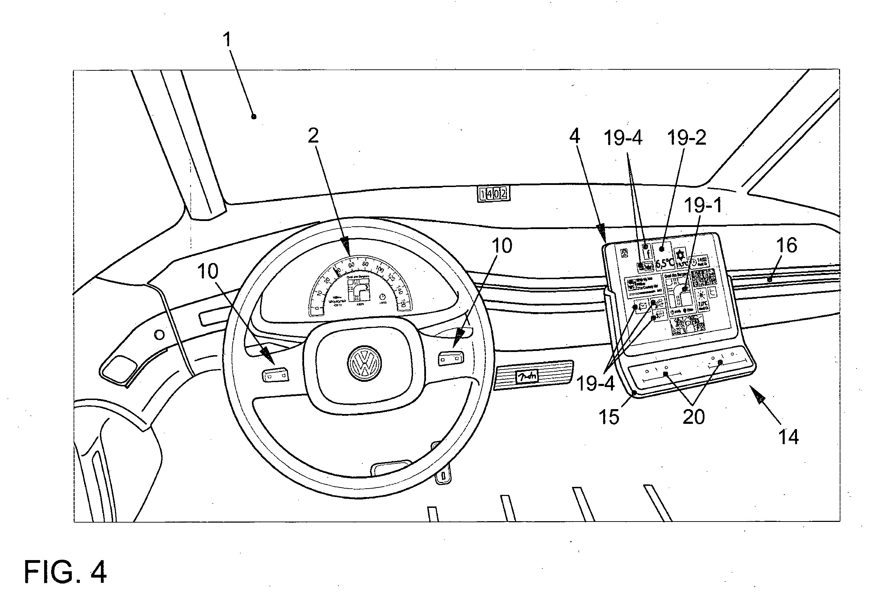

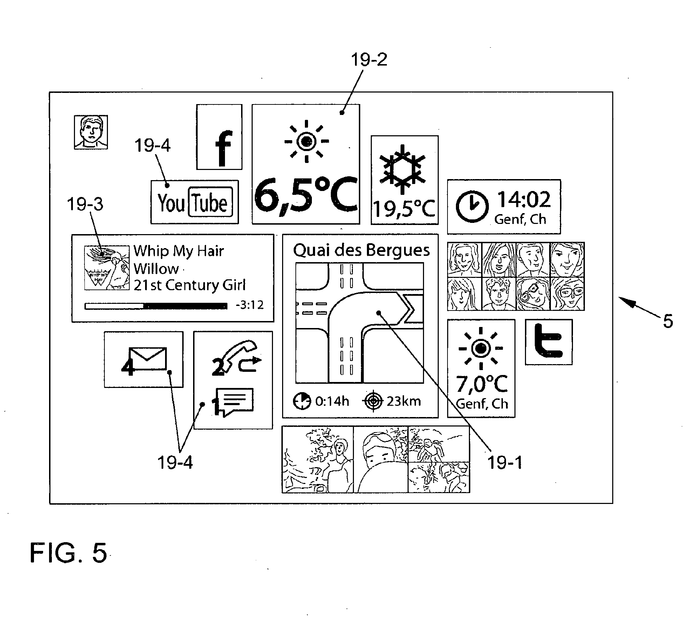

In den Fig. 4 und 5 ist die mobile Bedieneinrichtung 4 in der zweiten Position gezeigt und die entsprechende Anzeige auf der Anzeigefläche 5 der mobilen Bedieneinrichtung 4. Das Anzeigeelement 19-4 ist in diesem Fall in mehrere Elemente aufgeteilt, von denen ein Anzeigeelement 19-4 zum Beispiel einem Videodienst im Internet zugeordnet ist. Betätigt der Nutzer diese Bedienelement 19-4, indem er es zum Beispiel auf der berührungsempfindlichen Oberfläche 6 der mobilen Bedieneinrichtung 4 berührt, wird dieser Videodienst aufgerufen und der Beifahrer kann sich Videos dieses Videodienstes ansehen. Diese Funktion ist gesperrt, wenn sich die mobile Bedieneinrichtung 4 in der ersten Position befindet.

Außerdem werden verschiedene Anzeigeelemente 19 in einer ersten Darstellungsart angezeigt, wenn sich die mobile Bedieneinrichtung 4 in der ersten Position befindet und in einer anderen, zweiten Darstellungsart angezeigt, wenn sich die mobile Bedieneinrichtung 4 in der zweiten Position befindet.

## Patentansprüche

1. Bedienvorrichtung in einem Fahrzeug (1) mit
- einer mobilen Bedieneinrichtung (4), die eine Anzeigefläche (5) umfasst, auf welcher zumindest ein Anzeigeelement (19-4) anzeigbar ist, dem mehrere Funktionen zugeordnet sind,
- einer Halterung (14), von welcher die mobile Bedieneinrichtung (4) aufnehmbar ist,
- einer Eingabeeinrichtung (6, 8, 10, 20) zum Durchführen einer Eingabe, die einer zu dem Anzeigeelement (19-4) gehörigen Funktion zugeordnet ist, und
- einer Steuervorrichtung (7) zum Erzeugen eines Steuerbefehls in Abhängigkeit von einer Eingabe in die Eingabeeinrichtung (6, 8, 10, 20)
- wobei die Halterung (14) so ausgebildet ist, dass die mobile Bedieneinrichtung (4) bei zumindest zwei Positionen positionierbar ist,
**dadurch gekennzeichnet, dass**
- die Bedienvorrichtung eine mit der Steuervorrichtung (7) gekoppelte Positionserfassungseinrichtung (17) aufweist, mittels welcher die Positionen der von der Halterung (14) aufgenommenen mobilen Bedieneinrichtung (4) erfassbar sind,
- die dem Anzeigeelement (19-4) zugeordneten Funktionen in zumindest zwei Funktionsgruppen unterteilt sind,
- die Steuervorrichtung (7) so ausgebildet ist, dass nur Steuerbefehle der ersten Funktionsgruppe erzeugbar sind, wenn von der Positionserfassungseinrichtung (17) erfasst worden ist, dass sich die mobile Bedieneinrichtung (4) in einer ersten Position befindet, und dass nur Steuerbefehle der zweiten Funktionsgruppe erzeugbar sind, wenn von der Positionserfassungseinrichtung (17) erfasst worden ist, dass sich die mobile Bedieneinrichtung (4) in der zweiten Position befindet, und
- die Halterung (14) eine Leiste (16) und eine Aufnahmeeinrichtung (15) zum lösbaren Aufnehmen der mobilen Bedieneinrichtung (4) umfasst, wobei die Aufnahmeeinrichtung (15) entlang der Leiste (16) verschiebbar ist und Abschnitte der Leiste (16) der ersten und zweiten Position der mobilen Bedieneinrichtung (4) zugeordnet sind.

2. Bedienvorrichtung nach Anspruch 1,
**dadurch gekennzeichnet,**
**dass** die mobile Bedieneinrichtung (4) bei der ersten Position im Fahrzeug (1) für eine Bedienung durch den Fahrer angeordnet ist und bei der zweiten Position für eine Bedienung durch den Beifahrer angeordnet ist.

3. Bedienvorrichtung nach Anspruch 1 oder 2,
**dadurch gekennzeichnet,**
**dass** zumindest eine auf der Anzeigefläche (5) der mobilen Bedieneinrichtung (4) angezeigte Anzeigeelement (19-4) in einer ersten Darstellungsart angezeigt wird, wenn von der Positionserfassungseinrichtung (17) erfasst worden ist, dass sich die mobile Bedieneinrichtung (4) in der ersten Position befindet, und das Anzeigeelement (19-4) in einer zweiten Darstellungsart angezeigt wird, wenn von der Positionserfassungseinrichtung (17) erfasst worden ist, dass sich die mobile Bedieneinrichtung (4) in der zweiten Position befindet.

4. Bedienvorrichtung nach einem der vorhergehenden Ansprüche,
**dadurch gekennzeichnet, dass**
die Eingabeeinrichtung fest im Fahrzeug angeordnete Bedienelemente (8, 10, 20) und/oder Bedienelemente (6) der mobilen Bedieneinrichtung (4) umfasst.

5. Bedienvorrichtung nach Anspruch 4,
**dadurch gekennzeichnet,**
**dass** die fest im Fahrzeug angeordneten Bedienelemente (20) bei der Halterung (14) angeordnet sind und diese Bedienelemente (20) zum Bedienen von Fahrzeugfunktionen ausgebildet sind und/oder zum Bedienen von Funktionen ausgebildet sind, die Anzeigeelementen (19-1 bis 19-4) zugeordnet sind, die auf der Anzeigefläche (5) der mobilen Bedieneinrichtung (4) angezeigt werden.

6. Bedienvorrichtung nach einem der vorhergehenden Ansprüche,
**dadurch gekennzeichnet,**
**dass** die Bedienvorrichtung eine erste Schnittstelle (12) zum Datenaustausch zwischen der mobilen Bedieneinrichtung (4) und einem Datenbus (11) des Fahrzeugs (1) aufweist.

7. Bedienvorrichtung nach einem der vorhergehenden Ansprüche,
**dadurch gekennzeichnet,**
**dass** die Bedienvorrichtung eine zweite Schnittstelle (18) zum Datenaustausch zwischen der mobilen Bedieneinrichtung (4) und der Halterung (14) und eine dritte Schnittstelle (12) zum Datenaustausch zwischen der Halterung (14) und einem Datenbus (11) des Fahrzeugs (1) aufweist.

8. Bedienvorrichtung nach einem der vorhergehenden Ansprüche,
**dadurch gekennzeichnet,**
**dass** die Bedienvorrichtung eine Verarbeitungseinrichtung (19) umfasst, mittels welcher Kommunikationsverbindungen zum Internet und/oder zu Mobilfunknetzen herstellbar sind.

9. Fahrzeug mit einer Bedienvorrichtung nach einem der Ansprüche 1 bis 8.

## Claims

1. Operator control device in a vehicle (1), having
- a mobile operator control device (4) which comprises a display surface (5) on which at least one display element (19 - 4), to which multiple functions are assigned, can be displayed,
- a holder (14) by which the mobile operator control device (4) can be accommodated,
- an input device (6, 8, 10, 20) for making an input which is assigned to a function associated with the display element (19 - 4), and
- a control device (7) for generating a control instruction as a function of an input into the input device (6, 8, 10, 20),
- wherein the holder (14) is embodied in such a way that the mobile operator control device (4) can be positioned in at least two positions,
**characterized in that**
- the operator control device has a position-sensing device (17) which is coupled to the control device (7) and by means of which the positions of the mobile operator control device (4) which is accommodated by the holder (14) can be sensed,
- the functions which are assigned to the display element (19 - 4) are divided into at least two function groups,
- the control device (7) is embodied in such a way that only control instructions of the first function group can be generated if it has been sensed by the position-sensing device (17) that the mobile operator control device (4) is in a first position, and that only control instructions of the second function group can be generated if it has been sensed by the position-sensing device (17) that the mobile operator control device (4) is in the second position, and
- the holder (14) comprises a bar (16) and an accommodating device (15) for releasably accommodating the mobile operator control device (4), wherein the accommodating device (15) can be slid along the bar (16), and sections of the bar (16) are assigned to the first and second positions of the mobile operator control device (4).

2. Operator control device according to Claim 1,
**characterized**
**in that** the mobile operator control device (4) is arranged in the first position in the vehicle (1) for operator control by the driver, and in the second position for operator control by the front seat passenger.

3. Operator control device according to Claim 1 or 2,
**characterized**
**in that** at least one display element (19 - 4) which is displayed on the display surface (5) of the mobile operator control device (4) is displayed in a first display mode if it has been sensed by the position-sensing device (17) that the mobile operator control device (4) is in the first position, and the display element (19 - 4) is displayed in a second display mode if it has been sensed by the position-sensing device (17) that the mobile operator control device (4) is in the second position.

4. Operator control device according to one of the preceding claims,
**characterized**
**in that** the input device comprises operator control elements (8, 10, 20) and/or operator control elements (6) of the mobile operator control device (4) which are fixedly arranged in the vehicle.

5. Operator control device according to Claim 4,
**characterized**
**in that** the operator control elements (20) which are fixedly arranged in the vehicle are arranged on the holder (14), and these operator control elements (20) are designed to control the operation of vehicle functions and/or to control the operation of functions which are assigned to display elements (19 - 1 to 19 - 4) which are displayed on the display surface (5) of the mobile operator control device (4).

6. Operator control device according to one of the preceding claims,
**characterized**
**in that** the operator control device has a first interface (12) for exchanging data between the mobile operator control device (4) and a data bus (11) of the vehicle (1).

7. Operator control device according to one of the preceding claims,
**characterized**
**in that** the operator control device has a second interface (18) for exchanging data between the mobile operator control device (4) and the holder (14), and a third interface (12) for exchanging data between the holder (14) and a data bus (11) of the vehicle (1).

8. Operator control device according to one of the preceding claims,
**characterized**
**in that** the operator control device comprises a processing device (19) by means of which communication links to the Internet and/or to mobile radio networks can be established.

9. Vehicle having an operator control device according to one of Claims 1 to 8.

## Revendications

1. Système de manipulation dans un véhicule (1), comprenant
- un dispositif de manipulation mobile (4) qui comprend une surface d'affichage (5) sur laquelle peut être affiché au moins un élément d'affichage (19-4) auquel sont associées plusieurs fonctions,
- un support (14) par lequel peut être accueilli le dispositif de manipulation mobile (4),
- un dispositif de saisie (6, 8, 10, 20) servant à réaliser une saisie, laquelle est associée à une fonction faisant partie de l'élément d'affichage (19-4), et
- un système de commande (7) destiné à générer une instruction de commande en fonction d'une saisie dans le dispositif de saisie (6, 8, 10, 20),
- le support (14) étant configuré de telle sorte que le dispositif de manipulation mobile (4) peut être positionné sur au moins deux positions,
**caractérisé en ce que**
- le système de manipulation possède un dispositif de détection de position (17) couplé au système de commande (7) à l'aide duquel peuvent être détectées les positions du dispositif de manipulation mobile (4) accueilli par le support (14),
- les fonctions associées à l'élément d'affichage (19-4) sont subdivisées en au moins deux groupes de fonctions,
- le système de commande (7) est configuré de telle sorte que seules peuvent être générées les instructions de commande du premier groupe de fonctions si le dispositif de détection de position (17) a détecté que le dispositif de manipulation mobile (4) se trouve dans une première position, et que seules peuvent être générées les instructions de commande du deuxième groupe de fonctions si le dispositif de détection de position (17) a détecté que le dispositif de manipulation mobile (4) se trouve dans la deuxième position, et
- le support (14) comprend une barrette (16) et un dispositif d'accueil (15) destiné à accueillir de manière amovible le dispositif de manipulation mobile (4), le dispositif d'accueil (15) pouvant coulisser le long de la barrette (16) et des portions de la barrette (16) étant associées à la première et à la deuxième position du dispositif de manipulation mobile (4).

2. Système de manipulation selon la revendication 1, **caractérisé en ce qu'**avec la première position dans le véhicule (1), le dispositif de manipulation mobile (4) est disposé pour une manipulation par le conducteur et avec la deuxième position, il est disposé pour une manipulation par le passage.

3. Système de manipulation selon la revendication 1 ou 2, **caractérisé en ce qu'**au moins un élément d'affichage (19-4) affiché sur la surface d'affichage (5) du dispositif de manipulation mobile (4) est affiché dans un premier mode d'affichage lorsque le dispositif de détection de position (17) a détecté que le dispositif de manipulation mobile (4) se trouve dans la première position, et l'élément d'affichage (19-4) est affiché dans un deuxième mode d'affichage lorsque le dispositif de détection de position (17) a détecté que le dispositif de manipulation mobile (4) se trouve dans la deuxième position.

4. Système de manipulation selon l'une des revendications précédentes, **caractérisé en ce que** le dispositif de saisie comprend des éléments de manipulations (8, 10, 20) montés à demeure dans le véhicule et/ou des éléments de manipulation (6) du dispositif de manipulation mobile (4).

5. Système de manipulation selon la revendication 4, **caractérisé en ce que** les éléments de manipulation (20) montés à demeure dans le véhicule sont disposés au niveau du support (14) et ces éléments de manipulation (20) sont configurés pour manipuler des fonctions du véhicule et/ou sont configurés pour manipuler des fonctions qui sont associées à des éléments d'affichage (19-1 à 19-4) qui sont affichés sur la surface d'affichage (5) du dispositif de manipulation mobile (4).

6. Système de manipulation selon l'une des revendications précédentes, **caractérisé en ce que** le système de manipulation possède une première interface (12) destinée à l'échange de données entre le dispositif de manipulation mobile (4) et un bus de données (11) du véhicule (1).

7. Système de manipulation selon l'une des revendications précédentes, **caractérisé en ce que** le système de manipulation possède une deuxième interface (18) destinée à l'échange de données entre le dispositif de manipulation mobile (4) et le support (14), et une troisième interface (12) destinée à l'échange de données entre le support (14) et un bus de données (11) du véhicule (1).

8. Système de manipulation selon l'une des revendications précédentes, **caractérisé en ce que** le système de manipulation comprend un dispositif de traitement (19) à l'aide duquel peuvent être établies des liaisons de communication avec l'Internet et/ou avec des réseaux de radiocommunication mobile.

9. Véhicule équipé d'un système de manipulation selon l'une des revendications 1 à 8.
